Éuropäisches Patentamt

**European Patent Office**

Office européen des brevets

(19)

(11) Veröffentlichungsnummer : **0 007 434**
**B1**

(12)

# EUROPÄISCHE PATENTSCHRIFT

(45) Veröffentlichungstag der Patentschrift :
30.09.81

(51) Int. Cl.³ : **C 01 F   7/54**

(21) Anmeldenummer : **79102025.8**

(22) Anmeldetag : **19.06.79**

(54) **Verfahren zur Herstellung von kristallinem Kryolith.**

(30) Priorität : **14.07.78 DE 2831095**

(43) Veröffentlichungstag der Anmeldung :
**06.02.80 (Patentblatt 80/03)**

(45) Bekanntmachung des Hinweises auf die Patenterteilung : **30.09.81 Patentblatt 81/39**

(84) Benannte Vertragsstaaten :
**AT CH DE FR GB NL SE**

(56) Entgegenhaltungen :
**AT - B - 305 209**
**AT - B - 332 854**
**DE - C - 1 088 035**
**GB - A - 969 757**
**US - A - 3 485 579**
**US - A - 3 486 845**
**US - A - 3 493 330**
**US - A - 3 493 331**
**US - A - 3 656 894**

(73) Patentinhaber : **CHEMIE LINZ AKTIENGESELLS-**
**CHAFT**
**St. Peter-Strasse 25**
**A-4020 Linz (AT)**
**CH FR GB NL SE AT**
**Lentia Gesellschaft mit beschränkter Haftung**
**Schwanthalerstrasse 39 Postfach 20 16 26**
**D-8000 München 2 (DE)**
**DE**

(72) Erfinder : **Lunzer, Friedrich, Dipl.-Ing. Dr.**
**Innerer Graben 12**
**D-4100 Ottensheim (DE)**
Erfinder : **Kepplinger, Werner, Dipl.-Ing.**
**Lahholdstrasse 7**
**A-4020Linz (AT)**

Imprimerie Jouve, 17, rue du Louvre, 75001 Paris, France

## Verfahren zur Herstellung von kristallinem Kryolith

Gegenstand des Verfahrens ist die Herstellung von besonders haftwasserarmem, kristallinem Kryolith eines molaren Na:Al-Verhältnisses von etwa 2,9:1 bis etwa 3,0:1.

Nach der AT-B 332 854 muß man, um einen gut kristallinen, relativ wasserarmen Kryolith der oben erwähnten stöchiometrischen Zusammensetzung zu erhalten, die relativ teure Fluorwasserstoffsäure verwenden und bei einem PH zwischen 0 und 1 arbeiten. Da dabei von Natriumchlorid- oder Natriumsulfatlösungen ausgegangen wird, muß man ein stark salz- bzw. schwefelsaures Abwasser in Kauf nehmen bzw. das Verfahren selbst in Behältern aus korrosionsbeständigen Legierungen durchführen. Die Notwendigkeit einer genauen pH-Kontrolle mit Glaselektroden im flußsauren Medium ist zudem ebenfalls nachteilig.

Gegenstand der älteren HU-B-157 309 ist gleichfalls die Herstellung von kristallinem stöchiometrischem Kryolith, dessen Haftwassergehalt mit dem der o.a. Patentschrift vergleichbar ist. Er beträgt nach dem Filtrieren des Endproduktes etwa 12-16 Gew.% nach dem Zentrifugieren liegt er bei 6-10 Gew.%. Nach diesem Verfahren muß das Molverhältnis der Reaktionspartner NaF und AlF$_3$ im Reaktionsgemisch zwischen 2,75 bis 2,98, bevorzugt aber 2,90 betragen. Ein pH-Wert von 5 darf, wie in einem der Versuchsbeispiele ausdrücklich festgestellt wird, unter diesen Bedingungen nicht überschritten werden, weil sich damit die Kristallinität des Endproduktes verschlechtert.

Nach der GB-A-643 510 erfolgt die Reaktion von wäßrigen Aluminium- und Natriumfluoridlösungen in stöchiometrischen Mengen bei pH-Werten zwischen 3,5 und 4,5, wobei aber ein unterstöchiometrischer Kryolith eines Na:Al-Verhältnisses von 2,5 erhalten wird (siehe Beispiel unter B).

Nach der DT-B-1 088 035 wird synthetischer, an Phosphor-verbindungen möglichst armer Kryolith ausgehend von Aluminiumfluorid so hergestellt, daß mittels Mineralsäuren der pH-Wert des Reaktionsgemisches unter 2 gehalten wird, wobei die Natrium und Fluor liefernden Verbindungen mindestens in der für die Umsetzung von Aluminiumfluorid erforderlichen stöchiometrischen Mengen, vorzugsweise in nicht näher definierter größerer Menge angewendet werden. Diese Maßnahmen dienen der Verhinderung der Bildung von schwerlöslichen Eisen-, Titan- oder Aluminiumphosphatkomplexen durch Bildung löslicher Fluorkomplexe. Der allfällige Wassergehalt des Endproduktes ist nicht Gegenstand des Verfahrens. Er dürfte aber hoch sein, wie aus den stundenlangen Trocknungs- bzw. Calcinationszeiten der im Labormaßstab hergestellten Kryolithmengen hervorgeht.

Überraschenderweise wurde nun gefunden, daß man einen stöchiometrischen Kryolith mit noch weiter herabgesetztem Wassergehalt als dem in der ungarischen Patentschrift angegebenen erhalten kann, wenn man eine Reihe bestimmter Maßnahmen einhält, wozu u.a. gehört, daß man im Reaktionsgemisch ein bestimmtes, eng begrenztes molares Na:Al-Verhältnis von etwa stöchiometrisch bis zu einem 20 %igem NaF-Überschuß einhält, wobei die pH-Werte im Gegensatz zum älteren Verfahren zwischen 5,0 und 8 betragen. Die Folge sind Wassergehalte im Endprodukt zwischen etwa 6-8 % beim Abnutschen und von 1,5 bis 4 % beim Abzentrifugieren.

Gegenstand der Erfindung ist somit ein Verfahren zur Herstellung von kristallinem Kryolith eines molaren Verhältnisses Na:Al von 2,9:1 bis 3,0:1 durch Reaktion einer wäßrigen Lösung von Aluminiumfluorid mit der stöchiometrischen oder überstöchiometrischen Menge einer wäßrigen Lösung von Natriumfluorid unter Erhitzen und Rühren in Anwesenheit von Kryolith-Impfkristallen, Abtrennen des auskristallisierten Produktes und Calcinieren, welches dadurch gekennzeichnet ist, daß das Natriumfluorid in Mengen von 3,0 bis 3,6 Mol Na pro Mol Al angewendet wird, die AlF$_3$-Konzentration 15 bis 250 g/l und die NaF-Lösung 30 bis 21 g/l beträgt und die beiden Lösungen bei Temperaturen von 85-100 °C innerhalb von 0,5 bis 3 Stunden miteinander vermischt werden, wobei der pH-Wert der Reaktionsmischung zwischen 5,0 und 8 gehalten wird.

Bevorzugt geht man dabei von AlF$_3$-Konzentrationen zwischen 15 und 150 g/l aus, d.h., daß nach dem erfindungsgemäßen Verfahren auch AlF$_3$-haltige Mutterlaugen aus der AlF$_3$-Herstellung auf extrem wasserarmen Kryolith aufgearbeitet werden können. Der bevorzugte pH-Bereich der Reaktion liegt zwischen 5,0 und 7. Dies ist insoferne überraschend, als, wie erwähnt, nach der zitierten ungarischen Patentschrift pH-Werte von 5 keinesfalls überschritten werden dürfen. Im Gegensatz zu der zitierten britischen Patentschrift entspricht der SiO$_2$-Gehalt des Endproduktes trotzdem den Normen. Da im übrigen der pH-Wert der eingesetzten NaF-Lösungen im allgemeinen bei etwa 8 liegt, werden die erfindungsgemäßen pH-Werte im Reaktionsgemisch vielfach durch einfaches Zusammenmischen der Reaktionspartner erzielt. Allenfalls können sie nachgestellt werden.

Die Reaktionstemperaturen und Reaktionszeiten sind zwar aus anderen Kryolithverfahren, wo sie aber zu Produkten mit höheren Wassergehalten führen, an sich bekannt, sie sind jedoch mit den übrigen erfindungsgemäßen Maßnahmen wesentlich für den Erfolg des Verfahrens d.h. die Herstellung von stöchiometrischem, extrem wasserarmem Kryolith. Das gleiche gilt für die eingesetzten Natriumfluoridkonzentrationen, wobei die Obergrenze des erfindungsgemäßen Konzentrationsbereiches durch die Löslichkeit des Natriumfluorides gegeben ist.

Ein wesentlicher Vorteil des erfindungsgemäßen Verfahrens ist, daß bei Einhaltung aller erfindungsgemäßen Bedingungen der Kryolith praktisch quantitativ gefällt wird und auch optimal niedrige Wassergehalte erzielt werden. So beträgt unter vergleichbaren Temperatur- und Rührbedingungen in einem Reihenversuch bei einem Na:Al-Verhältnis von 3,08 und bei einem pH-Wert von 5,0 das Na:Al-Verhältnis im Endprodukt 2,91, der Haftwassergehalt im Endprodukt nach dem Abnutschen 4,4 und der Al-Gehalt des Abwassers 0,8 in % des eingesetzten Al. Bei einem molaren Na:Al-Verhältnis im Reaktionsgemisch von 3,4 und einem pH-Wert von 5,8 erhält man einen Kryolith eines Na:Al-Verhältnisses von 2,94, sein Wassergehalt beträgt nach dem Abnutschen 6,2 % und der Al-Gehalt des Abwassers ist praktisch O. Bei einem stöchiometrischen Verhältnis Na:Al von 3,0 und pH-Werten von etwa 4-4,5 abwärts steigt hingegen der Wassergehalt im Endprodukt und auch der Al-Gehalt im Abwasser stark an. Molare Na:Al-Verhältnisse im Reaktionsgemisch von 3,2 bis etwa 3,5:1 gewährleisten dabei ein Na:Al-Verhältnis im abfiltrierten Kryolith von etwa 2,92 bis etwa 2,94. Diese Werte fallen bereits unter den Begriff « stöchiometrischer Kryolith ». Für ein Überschreiten eines pH-Wertes von 8 glit das gleiche wie für ein Unterschreiten eines pH-Wertes von etwa 5.

Wesentlich für die Übertragung des Verfahrens in den großtechnischen Maßstab ist seine kontinuierliche Durchführbarkeit, wobei es sich als besonders vorteilhaft erwiesen hat, die NaF-Lösung auf die Kryolith-Impfkristalle enthaltende Reaktionsmischung unter Rühren aufzusprühen, weil auf diese Weise die Kristallinität des Endproduktes verbessert wird.

Die Einstellung optimaler Rührbedingungen macht auch im großtechnischen Maßstab keine Schwierigkeiten.

Die nachstehenden Beispiele sollen das erfindungsgemäße Verfahren näher erläutern:

Beispiel 1 :

Durch Reaktion einer AlF$_3$-Lösung mit einem AlF$_3$-Gehalt von 31,4 g/l und einer NaF-Lösung mit einem NaF-Gehalt von 35,4 g/l in verschiedenen stöchiometrischen Verhältnissen 1 aut nachstehender Tabelle wird Kryolith hergestellt. Die beiden Lösungen werden gleichzeitig innerhalb von 100 Minuten in einen Kristallisationsbehälter dosiert, in dem eine zu Beginn 0,4 %ige Kryolithsuspension vorgelegt wird. Die Temperatur im Reaktionsgefäß wird auf etwa 95 °C gehalten. Nach beendetem Zudosieren wird über eine Nutsche filtriert und das Haftwasser durch Trocknen bei 130 °C entfernt. Danach wird der Kryolith 2 Stunden bei 600 °C kalziniert.

Die Ergebnisse sind in der nachstehenden Tabelle dargestellt :

| a | b | c | d | e | f | g |
|---|---|---|---|---|---|---|
| 3,08 | 0,8 | 5,0 | 4,4 | 0,58 | 51,4 | 2,91 |
| 3,23 | 0,0 | 5,3 | 5,3 | 0,52 | 32,0 | 2,92 |
| 3,44 | 0,0 | 5,8 | 6,2 | 0,42 | 10,7 | 2,94 |

a = Molverhältnis Na:Al
b = % des eingesetzten Al in der Mutterlauge
c = pH der Mutterlauge
d = % Haftfeuchtigkeit des Produktes (nach Filtration)
e = % Glühverlust des Produktes (600 °C, 2 Stunden)
f = % des Produktes mit Teilchengröße über 120 μ
g = Molverhältnis Na:Al im Produkt.

Der Kieselsäuregehalt der eingesetzten AlF$_3$-Lösung betrug 0,21 g/l SiO$_2$, der der NaF-Lösung 0,47 g/l SiO$_2$. Die Endprodukte enthielten 0,03-0,09 % SiO$_2$.

Beträgt jedoch das Molverhältnis Na:Al 2,76:1 bei einem pH-Wert von 4,5, erhält man ein Endprodukt mit einem Wassergehalt von 19,4 %. Beträgt bei gleichem pH-Wert das molare Verhältnis Na:Al 2,87:1, dann beträgt der Wassergehalt des Endproduktes 15,2 %.

Beispiel 2 :

Eine Suspension von 2 g Kryolith in 500 ml Wasser wird auf 100 °C erhitzt. Unter Rühren werden gleichzeitig 500 ml einer technischen NaF-Lösung mit einem Gehalt von 39,7 g/l und einem pH-Wert von 8 und 177 ml einer AlF$_3$-Lösung mit einem Gehalt von 62,4 g/l in 90 min. zugetropft. Das Na:Al-Verhältnis im Reaktionsgemisch betrug 3,59:1. Der pH-Wert der Lösung betrug 7,5. Das über eine Nutsche abgesaugte Endprodukt hatte ein Na:Al-Verhältnis von 2,96 bei quantitativer Ausbeute. Der Al-Gehalt im Abwasser lag unter 1 mg/l. Der Wassergehalt betrug nach dem Abnutschen 7,7 %.

Beispiel 3 :

In eine Kryolithsuspension in einem 5 m$^3$-Reaktionsbehälter, die auf 95 °C gehalten und gerührt wird, werden gleichzeitig 0,320 m$^3$ einer AlF$_3$-Lösung mit einem AlF$_3$-Gehalt von 128,3 g/l eingetragen und 1,792 m$^3$/l einer NaF-Lösung mit einem NaF-Gehalt von 37,8 g/l auf die Oberfläche des Reaktionsgemisches aufgesprüht. Das Na:Al-Verhältnis in der Lösung betrug 3,30:1. Der pH-Wert betrug im Schnitt etwa 6-6,5. gleichzeitig wird dem Reaktionsbehälter kontinuierlich Kryolithsuspension entnommen und zentrifugiert.

Dabei wird bei etwa dreistündiger Verweilzeit ein Kryolith mit einem Haftwassergehalt von 1,8 % erhalten, der nach dem Kalzinieren bei 550 °C eine Ausbeute von 101,1 kg pro Stunde mit folgender Analyse ergibt : 12,8 % Al, 32,5 % Na, 55,1 % F, 0,05 % SiO$_2$, Na:Al-Verhältnis 2,98:1. Ausbeute 98 %.

Das Abwasser enthält etwa 0,1 g/l Al, 1,7 g/l Na, 1,1 g/l F. Etwa 2/3 des Abwassers werden zur Herstellung der NaF-Lösung (aus H$_2$SiF$_6$ und Na$_2$CO$_3$) rezirkuliert, sodaß die Fluorverluste pro Stunde ca. 0,9 kg betragen und eine Gesamtfluorausbeute von über 98 % erreicht wird.

**Ansprüche**

1. Verfahren zur Herstellung von kristallinem Kryolith eines molaren Verhältnisses Na:Al von 2,9:1 bis 3,0:1 durch Reaktion einer wäßrigen Lösung von Aluminium-fluorid mit der stöchiometrischen oder überstöchiometrischen Menge einer wäßrigen Lösung von Natriumfluorid unter Erhitzen und Rühren in Anwesenheit von Kryolith-Impfkristallen, Abtrennen des auskristallisierten Produktes und Calcinieren, dadurch gekennzeichnet, daß das Natriumfluorid in Mengen von 3,0 bis 3,6 Mol Na pro Mol Al angewendet wird, die AlF₃-Konzentration 15 bis 250 g/l und die der NaF-Lösung 30 bis 42 g/l beträgt und die beiden Lösungen bei Temperaturen von 85-100 °C innerhalb von 0,5 bis 3 Stunden miteinander vermischt werden, wobei der pH-Wert der Reaktionsmischung zwischen 5,0 und 8 gehalten wird.

2. Verfahren nach Anspruch 1, dadurch gekennzeichnet, daß die AlF₃-Konzentration von 15 bis 150 g/l betragen.

3. Verfahren nach den Ansprüchen 1 und 2, dadurch gekennzeichnet, daß das molare Na/Al-Verhältnis 3,2 bis 3,5:1 beträgt.

4. Verfahren nach den Ansprüchen 1 und 3, dadurch gekennzeichnet, daß die pH-Werte zwischen 5,0 und 7 betragen.

5. Verfahren nach den Ansprüchen 1 bis 4, dadurch gekennzeichnet, daß die Kryolithbildung kontinuierlich erfolgt, wobei vorzugsweise die Natriumfluoridlösung auf das kryolithimpfkristallhältige, gerührte Reaktionsgemisch aufgesprüht wird.

**Claims**

1. Process for the preparation of crystalline cryolite having a molar ratio Na:Al of 2.9:1 to 3.0:1 by reacting an aqueous solution of aluminium fluoride with the stoichiometric amount, or more than stoichiometric amount, of an aqueous solution of sodium fluoride whilst heating and stirring in the presence of cryolite seed crystals, separating off the product which has crystallised out and calcining it, characterised in that the sodium fluoride is used in amounts of 3.0 to 3.6 mols of Na per mol of Al, the AlF₃ concentration is 15 to 250 g/l, the concentration of the NaF solution is 30 to 42 g/l and the two solutions are mixed with one another at temperatures of 85-100 °C in the course of 0.5 to 3 hours, the pH value of the reaction mixture being kept at between 5.0 and 8.

2. Process according to Claim 1, characterised in that the AlF₃ concentration is from 15 to 150 g/l.

3. Process according to Claims 1 and 2, characterised in that the molar ratio Na:Al is 3.2:1 to 3.5:1.

4. Process according to Claims 1 and 3, characterised in that the pH values are between 5.0 and 7.

5. Process according to Claims 1 to 4, characterised in that the cryolite formation takes place continuously and in this continuous process the sodium fluoride solution is preferably sprayed onto the stirred reaction mixture containing cryolite seed crystals.

**Revendications**

1. Procédé pour la production de cryolithe cristalline présentant un rapport molaire Na:Al allant de 2,9:1 à 3,0:1 par réaction d'une solution aqueuse de fluorure d'aluminium avec une quantité stœchiométrique ou supérieure à une quantité stœchiométrique d'une solution aqueuse de fluorure de sodium, par chauffage et agitation en présence de cristaux formant germes de cryolithe, séparation du produit cristallisé et calcination, caractérisé en ce que le fluorure de sodium est utilisé en des quantités allant de 3,0 à 3,6 moles de Na par mole d'Al, en ce que la concentration en AlF₃ représente de 15 à 250 g/l et la concentration de la solution de NaF représente 30 à 42 g/l, et en ce que les deux solutions sont mélangées l'une avec l'autre à des températures allant de 85 à 100 °C en un laps de temps allant de 30 minutes à 3 heures, le pH du mélange réactionnel étant maintenu entre 5,0 et 8.

2. Procédé suivant la revendication 1, caractérisé en ce que la concentration en AlF₃ représente de 15 à 150 g/l.

3. Procédé suivant la revendication 1 ou 2, caractérisé en ce que le rapport molaire Na:Al est compris entre 3,2 et 3,5:1.

4. Procédé suivant l'une quelconque des revendications 1 à 3, caractérisé en ce que le pH est compris entre 5,0 et 7.

5. Procédé suivant l'une quelconque des revendications 1 à 4, caractérisé en ce que la formation de cryolithe a lieu de façon continue, la solution de fluorure de sodium étant de préférence pulvérisée sur le mélange réactionnel sous agitation contenant des cristaux formant germes de cryolithe.